# EUROPÄISCHE PATENTSCHRIFT

(11) **EP 0 809 061 B1**
(45) Veröffentlichungstag und Bekanntmachung des Hinweises auf die Patenterteilung: **10.01.2001**
(21) Anmeldenummer: 97400976.3
(22) Anmeldetag: 30.04.1997
(51) Int. Cl.: F16L 5/08, H02G 3/22

(54) **Vorrichtung zur Durchführung eines langgestreckten Gegenstandes durch eine Öffnung einer Wand**
Device for leading an elongated element through the opening of a wall
Dispositif de traversée d'un élément allongée au travers d'une ouverture dans une paroi

(30) Priorität: 25.05.1996 DE 29609416 U
(43) Veröffentlichungstag der Anmeldung: 26.11.1997
(73) Patentinhaber: ALCATEL, 75008 Paris (FR)
(72) Erfinder: Stansbie, Michael, 30900 Wedemark (DE)
(74) Vertreter: Döring, Roger, Dipl.-Ing.

(56) Entgegenhaltungen:
- EP-A- 0 237 758

## Beschreibung

Die Erfindung bezieht sich auf eine Vorrichtung zur Durchführung eines langgestreckten Gegenstandes durch eine Öffnung einer Wand, mit einer an der Wand befestigten ebenen Platte aus stabilem Material, die eine der Öffnung entsprechende und mit derselben fluchtende Durchbrechung hat, und mit einer um den langgestreckten Gegenstand herum angebrachten der Abdichtung dienenden Anordnung, die in Montageposition mit der Platte verbunden ist (Montageanweisung HTT 54.003-02 der Firma RFS Hannover, Ausgabe 8/95).

"Langgestreckter Gegenstand" im Sinne der Erfindung können Rohre und elektrische Kabel sein, insbesondere Hochfrequenzkabel. Im folgenden wird für alle möglichen Gegenstände stellvertretend die kurze Bezeichnung "Kabel" verwendet. Die Kabel haben in der Regel einen äußeren Schutzmantel aus Kunststoff. Ihre Seele ist daher gegen Feuchtigkeit geschützt, solange der Schutzmantel nicht beschädigt ist. Die Forderung nach einem wirksamen Schutz gegen Feuchtigkeit besteht auch für den Bereich der Durchführung des Kabels durch eine Wand, wenn dasselbe in ein Gebäude hineingeführt wird. Die Öffnung in der Wand muß nach Montage des Kabels so dicht verschlossen sein, daß durch dieselbe keine Feuchtigkeit in das Gebäude hineingelangen kann.

Aus der eingangs erwähnten Montageanweisung geht eine auf dem Markt erhältliche, als "Wandeinführung" bezeichnete Vorrichtung zum Durchführen eines Kabels durch eine Wand hervor. Diese besteht aus einem um das Kabel herumzulegenden Band aus einer Butyldichtmasse, einem über dem Band anzuordnenden, längsgeteilten Rohrstutzen mit einem Flansch sowie aus einer Spannschelle. Nach Verschraubung des Flansches mit einer an der Mauer eines Gebäudes befestigten, mechanisch stabilen Platte, wird die Spannschelle um den Rohrstutzen herumgelegt und durch das Anziehen von Schrauben verspannt. Diese Anordnung hat sich in der Praxis bewährt. Sie ist jedoch relativ aufwendig zu montieren.

Der Erfindung liegt die Aufgabe zugrunde, die eingangs geschilderte Vorrichtung in Aufbau und Handhabung zu vereinfachen.

Diese Aufgabe wird gemäß der Erfindung dadurch gelöst,
- daß die der Abdichtung dienende Anordnung als einteilige Gummimanschette ausgebildet ist, die eine in Längsrichtung verlaufende Trennstelle aufweist, an der sie verschließbar ist,
- daß in einer in der zur Anlage am Kabel bestimmten Innenfläche der Gummimanschette befindlichen, umlaufenden Nut eine ringförmige Einlage aus elastischem Material angebracht ist und
- daß die Gummimanschette an einem axialen Ende außen eine nach außen offene, umlaufende Vertiefung zur dicht anliegenden Aufnahme des die Durchbrechung der Platte begrenzenden Randes derselben aufweist.

Die Gummimanschette ist einteilig ausgeführt. Für die Abdichtung der Einführungsstelle eines Kabels in ein Gebäude braucht daher im wesentlichen nur noch ein Teil montiert zu werden, wenn die ringförmige Einlage im Wege der Vormontage in die Gummimanschette eingesetzt worden ist. Damit ist der Aufbau der ganzen für die Abdichtung der Einführungsstelle eingesetzten Vorrichtung wesentlich vereinfacht. Auch die Montage der Gummimanschette selbst ist einfach. Sie braucht nur nach dem Herumlegen um das Kabel mit einem Ende in die Durchbrechung der Platte hingedrückt zu werden, bis deren Randbereich rundum in die Vertiefung eingreift. Anschließend wird die Gummimanschette verschlossen, beispielsweise verschraubt. Sie ist feuchtigkeitsdicht mit der Platte verbunden und das Kabel ist durch die Einlage feuchtigkeitsdicht umschlossen.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:

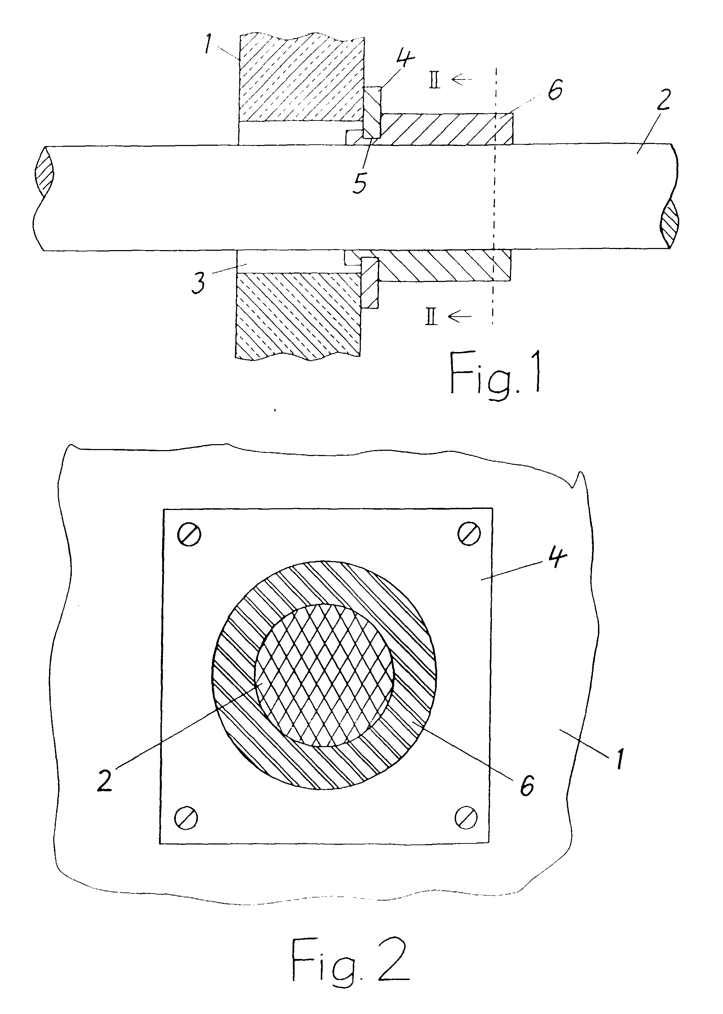

Fig. 1 in schematischer Darstellung eine Wanddurchführung mit einer Vorrichtung nach der Erfindung.

Fig. 2 einen Schnitt durch Fig. 1 längs der Linie II - II.

Fig. 3 eine Stirnansicht einer in der Vorrichtung verwendbaren Gummimanschette.

Fig. 4 einen Schnitt durch Fig. 3 längs der Linie IV - IV.

Fig. 5 eine Ansicht einer in der Gummimanschette einsetzbaren Einlage.

Fig. 6 einen Schnitt durch Fig. 5 längs der Linie VI - VI.

Fig. 7 eine Ansicht einer montierten Gummimanschette ohne Kabel.

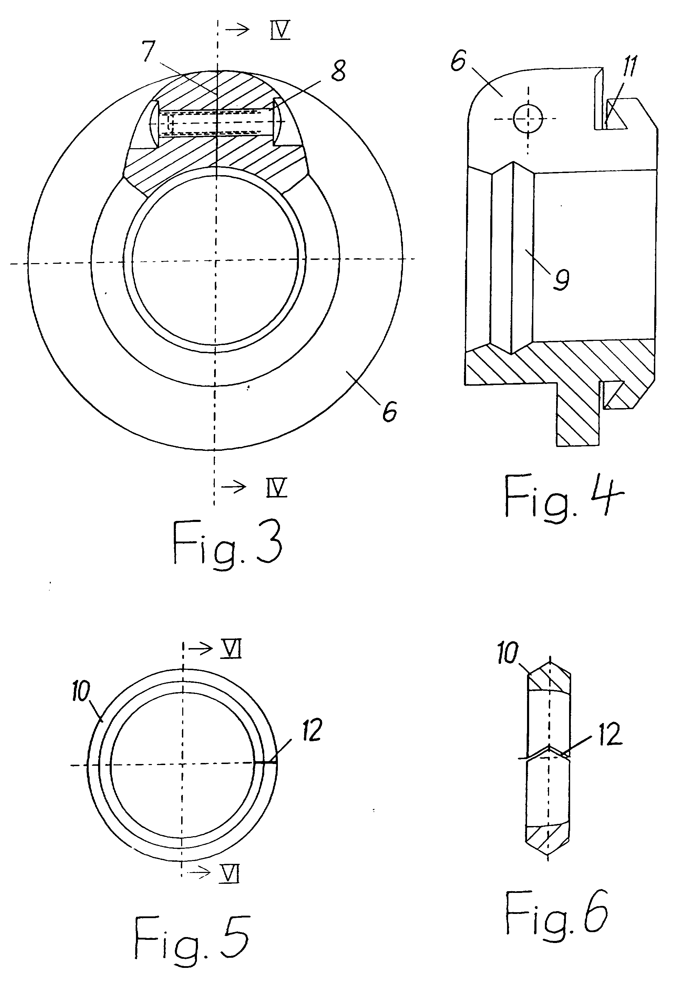

Mit 1 ist die Wand eines Gebäudes bezeichnet, in das ein Kabel 2 hineinragt. Dazu ist in der Wand 1 eine Öffnung 3 angebracht. In Höhe der Öffnung 3 ist außen an der Wand 1 eine mechanisch stabile, beispielsweise aus Stahl bestehende Platte 4 montiert, die eine mit der Öffnung 3 fluchtende Durchbrechung 5 aufweist. Im Einführungsbereich ist das Kabel 2 von einer Gummimanschette 6 umschlossen, die feuchtigkeitsdicht am Kabel 2 einerseits und an der Platte 4 andererseits anliegt. Der genauere Aufbau der Gummimanschette 6 und ihre Montage an der Einführungsstelle des Kabels 2 in die Wand 1 gehen aus den Fig. 3 bis 7 hervor.

Die Gummimanschette 6 ist einteilig ausgeführt. Sie ist an einer Trennstelle 7 in Längsrichtung geteilt, so daß sie um das Kabel 2 herumgelegt werden kann. Der Bereich der Trennstelle 7 dient auch zum Verschließen der Gummimanschette 6. Er ist entsprechend erweitert, so daß beispielsweise mindestens eine Schraube 8 darin angebracht werden kann. Die Gummimanschette 6 ist dann mittels einer Schraubverbindung verschließbar. Sie kann aber auch auf andere Art und Weise verschlossen werden. Beispielsweise durch eine Schnappverbindung.

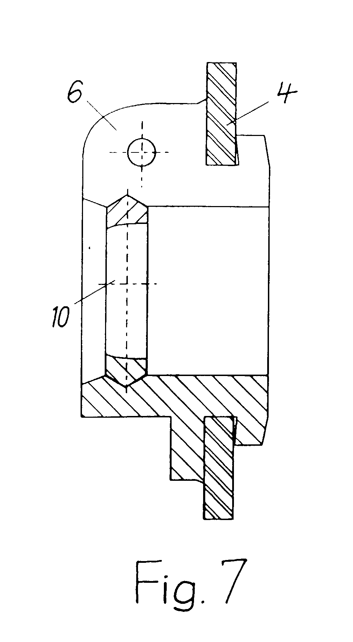

In ihrer inneren Oberfläche weist die Gummimanschette 6 eine umlaufende Nut 9 auf, in welche eine aus den Fig. 5 und 6 ersichtliche, ringförmige Einlage 10 aus elastischem Material einsetzbar ist. Die Gummimanschette 6 mit darin befindlicher Einlage 10 geht aus Fig. 7 hervor. Der Innenraum der Gummimanschette 6 ist gemäß Fig. 4 an ihrem einen Ende nach außen konisch erweitert. Die dadurch gebildete schräge Ablaufkante stellt sicher, daß in diesem Bereich der Gummimanschette 6 sich keine Feuchtigkeit ansammeln kann.

An dem der konischen Erweiterung abgewandten Ende ist in der Gummimanschette 6 außen eine umlaufende Vertiefung 11 angebracht. Sie dient zur dichtenden Aufnahme des Randes der Platte 4, wenn die Gummimanschette 6 in deren Durchbrechung 5 eingesetzt ist. Diese Montageposition der Gummimanschette 6 geht aus Fig. 7 hervor. Die Gummimanschette 6 liegt auf beiden Seiten abdichtend an der Platte 4 an. Zur weiteren Verbesserung der Dichtigkeit kann vor Montage der Gummimanschette 6 ein zusätzliches Dichtelement in der Vertiefung 11 angebracht werden, beispielsweise ein Ring aus einer Butyldichtmasse.

Die Einlage 10 besteht aus elastischem Material, beispielsweise aus einem Gummi. Sie muß relativ leicht zusammendrückbar sein, um ihrer Funktion als Dichtkörper optimal zu entsprechen. Die Einlage 10 hat in bevorzugter Ausführungsform eine Trennstelle 12, so daß sie ebenso wie die Gummimanschette 6 und vorzugsweise mit derselben in radialer Richtung auf das Kabel 2 aufgesetzt werden kann. Zur weiteren Verbesserung ihrer Dichtwirkung kann die Einlage 10 an ihrem einen axialen Ende eine symmetrisch zur Mittelachse verkleinerte lichte Weite haben. Das geht aus den Fig. 6 und 7 hervor.

Gummimanschette 6 und Einlage 10 umschließen in bevorzugter Ausführungsform einen kreisrunden Innenraum. Dieser Innenraum kann aber auch einen anderen lichten Querschnitt haben. Er kann beispielsweise elliptisch sein. Das ist dann von Vorteil, wenn das Kabel 2 ein elliptischer elektromagnetischer Hohlleiter ist.

Die Vorrichtung nach der Erfindung wird beispielsweise wie folgt gehandhabt:

Nach Fertigstellung der Öffnung 3 in der Wand 1 wird die Platte 4 an derselben montiert. Anschließend wird das Kabel 2 so weit eingezogen, daß eine ausreichende Länge desselben in das von der Wand 1 begrenzte Gebäude hineinragt. Die Gummimanschette 6 wird seitwärts auf das Kabel 2 aufgesetzt und in axialer Richtung bis zur Platte 4 verschoben. Durch gleichzeitiges Drehen und Drücken wird das Ende der Gummimanschette 6 in der Durchbrechung 5 der Platte 4 in eine aus Fig. 7 ersichtliche Position gebracht. Dann wird die Einlage 10 ebenfalls seitwärts auf das Kabel 2 aufgesetzt und axial in die Gummimanschette 6 hineingeschoben, bis sie gemäß Fig. 7 in deren Nut 9 liegt. Abschließend wird die Gummimanschette 6 durch Anziehen der Schraube 8 verschlossen. Dabei wird die Einlage 10 fest an das Kabel 2 angepreßt.

## Patentansprüche

1. Vorrichtung zur Durchführung eines langgestreckten Gegenstandes (2) durch eine Öffnung einer Wand (1), mit einer an der Wand befestigten ebenen Platte aus stabilem Material, die eine der Öffnung entsprechende und mit derselben fluchtende Durchbrechung (5) hat, und mit einer um den langgestreckten Gegenstand herum angebrachten der Abdichtung (6) dienenden Anordnung, die in Montageposition mit der Platte verbunden ist, wobei
- die der Abdichtung dienende Anordnung als einteilige Gummimanschette (6) ausgebildet ist, die eine in Längsrichtung verlaufende Trennstelle (7) aufweist, an der sie verschließbar ist,
- in einer in der zur Anlage am langgestreckten Gegenstand (2) bestimmten Innenfläche der Gummimanschette (6) befindlichen, umlaufenden Nut (9) eine ringförmige Einlage (10) aus elastischem Material angebracht ist und
- die Gummimanschette (6) an einem axialen Ende außen eine nach außen offene, umlaufende Vertiefung (11) zur dicht anliegenden Aufnahme des die Durchbrechung (5) der Platte (4) begrenzenden Randes derselben aufweist.

2. Vorrichtung nach Anspruch 1, dadurch gekennzeichnet, daß die lichte Weite der Einlage (10) an ihrem einen axialen Ende symmetrisch zur Mittelachse verkleinert ist.

3. Vorrichtung nach Anspruch 1 oder 2, dadurch gekennzeichnet, daß die Gummimanschette (6) durch eine Schraubverbindung verschließbar ist.

4. Vorrichtung nach Anspruch 1 oder 2, dadurch gekennzeichnet, daß die Gummimanschette (6) durch eine Schnappverbindung verschließbar ist.

5. Vorrichtung nach einem der Ansprüche 1 bis 4, dadurch gekennzeichnet, daß in der umlaufenden Vertiefung (11) ein Dichtelement angebracht ist.

6. Vorrichtung nach einem der Ansprüche 1 bis 5, dadurch gekennzeichnet, daß der Innenraum der Gummimanschette (6) an ihrem der umlaufenden Vertiefung (11) abgewandten Ende nach außen konisch erweitert ist.

## Claims

1. A device to guide a long object (2) through an opening in a wall with a flat stable material affixed to the wall that has a penetration (5) corresponding to and flush with the opening, and with an arrangement surrounding the long object and serves as a seal (6), and the arrangement is connected to the plate when installed, whereby:
- the arrangement serving as the seal is designed as a single-part rubber sleeve (6) that has a lengthwise slit (7) at which it can close,
- there is an annular insert (10) made of an elastic material in a peripheral groove (9) in the inner surface of the rubber sleeve (6) for the long object (2), and
- the rubber sleeve (6) has an outer peripheral recess (11) at an axial end that is open to the outside to tightly receive the edge of the plate (4) next to the penetration (5).

2. A device according to claim 1, characterized in that the inner width of the insert (10) is smaller at one axial end symmetrical to the midaxis.

3. A device according to claims 1 or 2, characterized in that the rubber sleeve (6) is sealable with a screw connection.

4. A device according to claims 1 or 2, characterized in that rubber sleeve (6) is sealable with a snap connection.

5. A device according to one of claims 1 - 4, characterized in that there is a sealing element in the peripheral recess (11)

6. A device according to one of claims 1 - 5, characterized in that the interior of the rubber sleeve (6) expands conically at the end opposite the peripheral recess (11).

## Revendications

1. Dispositif de passage d'un objet très allongé (2) à travers un orifice ménagé dans un mur (1) grâce à une plaque plane (4) en matériau solide fixée au mur et possédant un orifice (5) parfaitement aligné sur l'orifice du mur (1) et dotée d'une structure (6) disposée sur tout le pourtour de l'objet très allongé (2), servant à l'étanchéité et reliée à la plaque (4) en position de montage, selon lequel
- le dispositif d'étanchéité est conçu sous la forme d'un manchon en caoutchouc (6) d'un seul tenant et présentant une fente séparatrice (7) dans le sens longitudinal au niveau de laquelle il peut être fermé,
- un insert annulaire (10) en matériau élastique est introduit dans la rainure périphérique (9) aménagée sur la face intérieure spécifique du manchon en caoutchouc (6) destiné à s'adapter sur l'objet très allongé (2) et
- le manchon en caoutchouc (6) présente au niveau d'une extrémité axiale externe un renfoncement (11) périphérique orienté vers l'extérieur pour application étroite sur le bord séparateur de la plaque (4) en contact avec l'orifice de passage (5).

2. Dispositif selon l'exigence 1 caractérisé par le fait que le diamètre interne de l'insert (10) est réduit à son extrémité axiale de manière symétrique à l'axe médian.

3. Dispositif selon exigence 1 ou 2, caractérisé par le fait que le manchon en caoutchouc (6) peut être fermé par raccord vissé.

4. Dispositif selon exigence 1 ou 2 caractérisé par le fait que le manchon en caoutchouc (6) peut être fermé au moyen d'un assemblage à enclenchement.

5. Dispositif selon l'une des exigences 1 à 4 caractérisé par le fait qu'un élément d'étanchéité est placé à l'intérieur du renfoncement (11) périphérique.

6. Dispositif selon l'une des exigences 1 à 5, caractérisé par le fait que l'espace interne du manchon en caoutchouc (6) est élargi vers l'extérieur de manière conique au niveau de l'extrémité tournée vers le renfoncement périphérique (11)
